# EUROPEAN PATENT APPLICATION

(11) **EP 2 846 450 A2**
(43) Date of publication of application: **11.03.2015**
(21) Application number: 14181550.6
(22) Date of filing: 20.08.2014
(51) Int. Cl.: H02M 7/48, H02J 3/36

(54) **Electric power conversion system and method of operating the same**

(30) Priority: 06.09.2013 US 201314020111
(71) Applicant: GE Energy Power Conversion Technology Ltd, Rugby Warwickshire CV21 1BU (GB)
(72) Inventor: Raju, Ravisekhar Nadimpalli, Niskayuna, NY New York 12309-1027 (US); Gupta, Ranjan Kumar, Niskayuna, NY New York 12309-1027 (US); Chokhawala, Rahul Shantilal, Niskayuna, NY New York 12309-1027 (US)
(74) Representative: Serjeants LLP

(57) **Abstract**

An electric power conversion system (300) is coupled to a high voltage direct current (HVDC) transmission system (304). The electric power conversion system includes a plurality of power conversion modules (306). At least one of the power conversion modules includes at least one power converter coupled to at least one DC power terminal (307). The power conversion module also includes at least one isolation device coupled to the at least one power converter. The at least one power converter and the at least one isolation device at least partially define an isolatable portion of the electric power conversion system. The at least one isolation device is configured to remove the isolatable portion from service. The at least one power converter is configured to decrease electric current transmission through the isolatable portion prior to opening the at least one isolation device.

## Description

This invention was made with Government support under contract number DE-AR0000224 awarded by the Advanced Research Projects Agency-Energy (ARPA-E). The Government may have certain rights in this invention.

### BACKGROUND

The field of the disclosure relates generally to high voltage direct current (HVDC) transmission systems and, more particularly, to electric power conversion systems and their methods of operation.

At least some known electric power generation facilities are physically positioned in a remote geographic region or in an area where physical access is difficult. One example includes power generation facilities geographically located in rugged and/or remote terrain, for example, mountainous hillsides, extended distances from the customers, and off-shore, e.g., off-shore wind turbine installations. More specifically, these wind turbines may be physically nested together in a common geographic region to form a wind turbine farm and are electrically coupled to a common alternating current (AC) collector system. Many of these known wind turbine farms are coupled to AC transmission systems through a power converter, a power transformer, and an AC circuit breaker. Many of the known power converters are a power conversion assembly, or system, electrically coupled to the AC collector system and power transformer. Such known power conversion assemblies include a rectifier portion that converts the AC generated by the power generation facilities to direct current (DC) and an inverter portion that converts the DC to AC of a predetermined frequency and voltage amplitude. Many of the known AC circuit breakers facilitate uncoupling the power generation facility from the AC transmission system when the power generation facility needs to be isolated, e.g., when the facility is removed from service due to an electrical fault on either side of the circuit breaker.

Similarly, some wind turbine farms are coupled to a high voltage (HVDC) transmission system through a separated power conversion assembly, or system, electrically coupled to the AC collector system and the HVDC transmission system. In such configurations, the rectifier portion of the separated power conversion assembly is positioned in close proximity to the associated power generation facilities and the inverter portion of the separated full power conversion assembly is positioned in a remote facility, such as a land-based facility. Such rectifier and inverter portions are typically electrically connected via submerged HVDC electric power cables that at least partially define the HVDC transmission system. Also, at least some known HVDC transmission systems are coupled to DC loads that do not require an inverter portion of AC conversion.

Many known HVDC transmission systems include isolation devices, e.g., DC circuit breakers and reclosers, positioned to define isolatable portions of the system. Such isolation devices may be opened to isolate electrical faults and, possibly, closed to restore as much of the system to service as possible once the fault is isolated. However, these devices may be rated for voltages in excess of 100 kilovolts (kV) and DC circuit breakers rated for such high voltages are typically not commercially available other than through custom design and manufacture. Therefore, the costs associated with construction and maintenance of HVDC transmission systems may be significantly increased. Moreover, any alternatives to fast-acting circuit breakers would need to provide similar fast-acting characteristics for timely and effective fault isolation.

In addition, many known HVDC transmission systems include a Supervisory Control and Data Acquisition (SCADA) system, or some equivalent, that includes current and voltage sensors positioned therein to facilitate isolation and restoration operations. However, in contrast to AC transmission systems, due to the nature of DC, i.e., no zero-crossing of the amplitudes of DC voltages and currents as a function of time, such opening of the DC circuit breakers requires opening the devices under load, including higher than typical loads due to the fault, thereby increasing the risk of arcing at the contactor portions of the mechanical isolation devices with a potential decrease of service life of the contactor portions. Also, in the event of an upward DC current excursion, with increased loading due to the fault, it is generally considered that an operation of a mechanism has approximately five milliseconds (ms) to isolate the associated fault.

### BRIEF DESCRIPTION

In one aspect, an electric power conversion system is provided. The electric power conversion system is coupled to a high voltage direct current (HVDC) transmission system. The electric power conversion system includes a plurality of power conversion modules. At least one power conversion module of the plurality of power conversion modules includes at least one power converter coupled to at least one DC power terminal.. The power conversion module also includes at least one isolation device coupled to the at least one power converter. The at least one power converter and the at least one isolation device at least partially define an isolatable portion of the electric power conversion system. The at least one isolation device is configured to remove the isolatable portion from service. The at least one power converter is configured to decrease electric current transmission through the isolatable portion prior to opening the at least one isolation device.

In a further aspect, a control system for an electric power conversion system is provided. The electric power conversion system is coupled to an HVDC transmission system. The electric power conversion system includes a plurality of power conversion modules. The at least one of the power conversion module includes at least one power converter coupled to at least one DC power terminal. The at least one power conversion module further includes at least one isolation device coupled to the at least one power converter. The at least one power converter and the at least one isolation device at least partially define an isolatable portion of the electric power conversion system. The at least one isolation device is configured to remove the isolatable portion from service. The at least one power converter is configured to decrease electric current transmission through the isolatable portion prior to opening of the at least one isolation device. The control system includes at least one sensor configured to transmit at least one signal representative of a value of electric current transmission through at least one of the electric power conversion system and the HVDC transmission system. The control system also includes at least one processor coupled to the at least one sensor, the at least one power converter, and the at least one isolation device. The at least one processor is configured to determine at least one of electric current transmission approaching, attaining, and exceeding at least one parameter of at least one of the electric power conversion system and the HVDC transmission system. The at least one processor is also configured to regulate electric current transmission through the isolatable portion at least partially as a function of the value of electric current transmission through at least one of the electric power conversion system and the HVDC transmission system. The at least one processor is further configured to open the at least one isolation device when said at least one sensor measures electric current transmission at a predetermined value.

In another aspect, a method of operating an electric power conversion system is provided. The electric power conversion system is coupled to a high voltage direct current (HVDC) transmission system. The electric power conversion system includes a plurality of power conversion modules. Each power conversion module includes at least one power converter coupled to at least one DC power terminal. The at least one power conversion module further includes at least one isolation device coupled to the at least one power converter. The at least one power converter and the at least one isolation device at least partially define an isolatable portion of the power conversion module. Each power conversion module also includes at least one sensor configured to transmit at least one signal representative of a value of electric current transmission through at least one of the electric power conversion system and the HVDC transmission system. The method includes determining electric current transmission through at least one of the electric power conversion system and the HVDC transmission system is one of approaching, attaining, and exceeding at least one parameter of at least one of the electric power conversion system and the HVDC transmission system. The method also includes regulating electric current transmission through the isolatable portion at least partially as a function of the value of electric current transmission through at least one of the electric power conversion system and the HVDC transmission system. The method further includes opening the at least one isolation device when the at least one sensor measures electric current transmission at a predetermined value.

### DRAWINGS

These and other features, aspects, and advantages of the present invention will become better understood when the following detailed description is read with reference to the accompanying drawings in which like characters represent like parts throughout the drawings, wherein:
FIG. 1 is a block diagram of an exemplary computing device;
FIG. 2 is block diagram of a portion of an exemplary monitoring and control system that may include the computing device shown in FIG. 1;
FIG. 3 is a schematic diagram of an exemplary electric power conversion system that may be monitored and controlled using the system shown in FIG. 2;
FIG. 4 is a schematic diagram of an exemplary power conversion module that may be used with the electric power conversion system shown in FIG. 3;
FIG. 5 is another schematic diagram of the power conversion module shown in FIG. 4;
FIG. 6 is a schematic diagram of a portion of the electric power conversion system shown in FIG. 3 with a fault shown;
FIG. 7 is a schematic diagram of an alternative power conversion module that may be used with the electric power conversion system shown in FIG. 3;
FIG. 8 is a schematic diagram of an alternative electric power conversion system that may be monitored and controlled using the system shown in FIG. 2;
FIG. 9 is a schematic diagram of an alternative power conversion module that may be used with the electric power conversion system shown in FIG. 8;
FIG. 10 is another schematic diagram of the power conversion module shown in FIG. 9;
FIG. 11 is a schematic diagram of another alternative electric power conversion system that may be monitored and controlled using the system shown in FIG. 2;
FIG. 12 is a schematic diagram of yet another alternative electric power conversion system that may be monitored and controlled using the system shown in FIG. 2;
FIG. 13 is a schematic diagram of an alternative power conversion module that may be used with the electric power conversion system shown in FIG. 8; and
FIG. 14 is a schematic diagram of another alternative power conversion module that may be used with the electric power conversion systems shown in FIGs. 8, 11, and/or 12.

Unless otherwise indicated, the drawings provided herein are meant to illustrate features of embodiments of the disclosure. These features are believed to be applicable in a wide variety of systems comprising one or more embodiments of the disclosure. As such, the drawings are not meant to include all conventional features known by those of ordinary skill in the art to be required for the practice of the embodiments disclosed herein.

### DETAILED DESCRIPTION

In the following specification and the claims, reference will be made to a number of terms, which shall be defined to have the following meanings.

The singular forms "a", "an", and "the" include plural references unless the context clearly dictates otherwise.

"Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about" and "substantially", are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise.

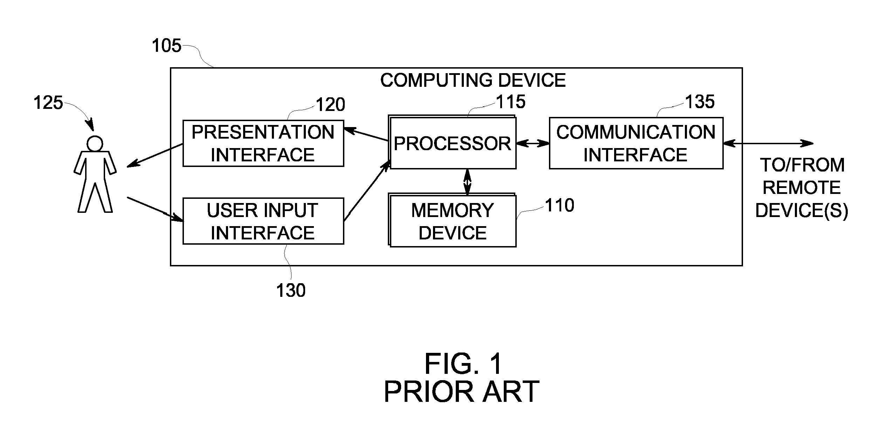

As used herein, the term "computer" and related terms, e.g., "computing device", are not limited to integrated circuits referred to in the art as a computer, but broadly refers to a microcontroller, a microcomputer, a programmable logic controller (PLC), an application specific integrated circuit, and other programmable circuits (none shown in FIG. 1), and these terms are used interchangeably herein.

Further, as used herein, the terms "software" and "firmware" are interchangeable, and include any computer program stored in memory for execution by personal computers, workstations, clients and servers.

Moreover, as used herein, the term "non-transitory computer-readable media" includes all tangible, computer-readable media, such as a firmware, floppy disk, CD-ROMs, DVDs and another digital source such as a network or the Internet, as well as yet to be developed digital means, with the sole exception being a transitory, propagating signal.

Furthermore. as used herein, the term "real-time" refers to at least one of the time of occurrence of the associated events, the time of measurement and collection of predetermined data, the time to process the data, and the time of a system response to the events and the environment. In the embodiments described herein, these activities and events occur substantially instantaneously.

The electric power conversion systems for HVDC transmission systems described herein provide a cost-effective method for transmitting HVDC power. The embodiments described herein facilitate transmitting HVDC power across relatively large distances while facilitating rapid detection and isolation of affected electric power conversion systems in the event of electrical faults on the HVDC transmission system. The embodiments described herein also facilitate rapid restoration of the affected electric power conversion systems after the faulted portions of the system are effectively isolated. Specifically, the devices, systems, and methods described herein include a plurality of bi-directional power converters and mechanical isolation devices that are operatively coupled to the bi-directional power converters. The bi-directional power converters and mechanical isolation devices define isolable portions of the electric power conversion system. The bi-directional power converters facilitate real-time decreasing of electric current through the isolable portions in the event that electric current sensed being transmitted through the conversion system or on the HVDC transmission system exceeds parameters as communicated in real time to a Supervisory Control and Data Acquisition (SCADA) system. Specifically, in the event that sensed electric current exceed parameters, the bi-directional power converters decrease the electric current transmitted therethrough and as the current approaches or attains a value of approximately zero, the SCADA system initiates opening the associated mechanical isolation devices with a significantly reduced load that will approach zero amperes, thereby mitigating a potential for damage to the contactors of the mechanical isolation devices. Fault isolation occurs approximately three orders of magnitude more rapidly than the typical five milliseconds (ms) needed to reduce a partial for a reduction of service life to the affected components.

Also, the devices, systems, and methods described herein facilitate system restoration. Once the electrical fault is cleared, the SCADA system will initiate post-fault recovery actions. Specifically, the cleared mechanical isolation devices will reclose under near-zero loads and the associated bi-directional power converters will increase the current transmitted through the restored isolable portions to restore DC power transmission to the affected portions expeditiously.

FIG. 1 is a block diagram of an exemplary computing device 105 that may be used to perform monitoring and/or control of a high voltage direct current (HVDC) transmission system and, more specifically, an electric power conversion system (neither shown in FIG. 1). More specifically, computing device 105 monitors and/or controls any piece of equipment, any system, and any process associated with an electric power conversion system and a HVDC transmission system, e.g., without limitation, bi-directional power converters, mechanical isolation devices, and monitoring devices (neither shown in FIG. 1). Computing device 105 includes a memory device 110 and a processor 115 operatively coupled to memory device 110 for executing instructions. In some embodiments, executable instructions are stored in memory device 110. Computing device 105 is configurable to perform one or more operations described herein by programming processor 115. For example, processor 115 may be programmed by encoding an operation as one or more executable instructions and providing the executable instructions in memory device 110. In the exemplary embodiment, memory device 110 is one or more devices that enable storage and retrieval of information such as executable instructions and/or other data. Memory device 110 may include one or more computer readable media.

Memory device 110 may be configured to store operational measurements including, without limitation, real-time and historical vibration values, and/or any other type data. Also, memory device 110 includes, without limitation, sufficient data, algorithms, and commands to facilitate monitoring and control of the components within a HVDC transmission system and an associated electric power conversion system.

In some embodiments, computing device 105 includes a presentation interface 120 coupled to processor 115. Presentation interface 120 presents information, such as a user interface and/or an alarm, to a user 125. In some embodiments, presentation interface 120 includes one or more display devices. In some embodiments, presentation interface 120 presents an alarm associated with the HVDC transmission system and associated electric power conversion system being monitored, such as by using a human machine interface (HMI) (not shown in FIG. 1). Also, in some embodiments, computing device 105 includes a user input interface 130. In the exemplary embodiment, user input interface 130 is coupled to processor 115 and receives input from user 125.

A communication interface 135 is coupled to processor 115 and is configured to be coupled in communication with one or more other devices, such as a sensor or another computing device 105, and to perform input and output operations with respect to such devices while performing as an input channel. Communication interface 135 may receive data from and/or transmit data to one or more remote devices. For example, a communication interface 135 of one computing device 105 may transmit an alarm to the communication interface 135 of another computing device 105.

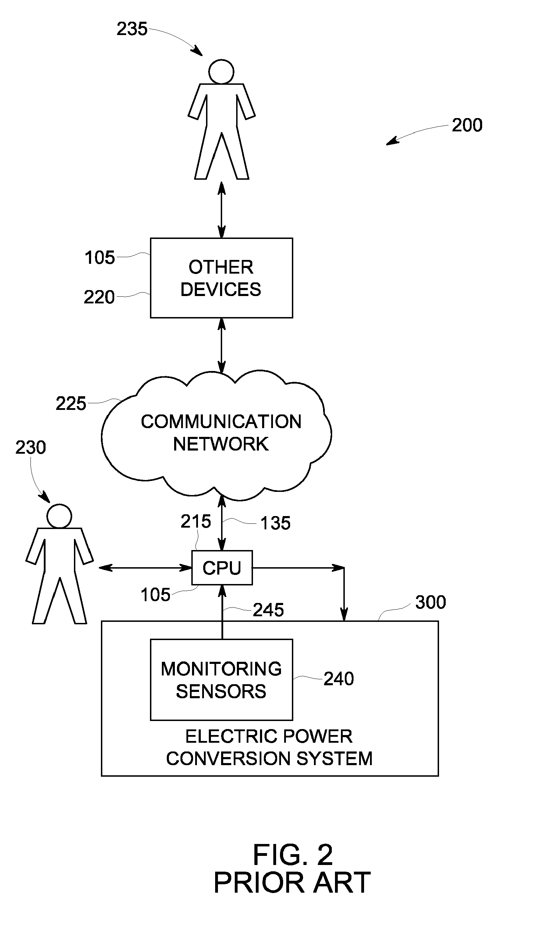

FIG. 2 is block diagram of a portion of a monitoring and control system, i.e., in the exemplary embodiment, a Supervisory Control and Data Acquisition (SCADA) system 200 that may be used to monitor and control at least a portion of an electric power conversion system 300 and an associated HVDC transmission system (not shown in FIG. 2). As used herein, the term "SCADA system" refers to any control and monitoring system that may monitor and control electric power conversion system 300 across multiple sites, remote sites, and large distances. In the exemplary embodiment, SCADA system 200 includes at least one central processing unit (CPU) 215 configured to execute monitoring algorithms and monitoring logic. CPU 215 may be coupled to other devices 220 via a communication network 225.

Referring to FIGs. 1 and 2, CPU 215 is a computing device 105. In the exemplary embodiment, computing device 105 is coupled to network 225 via communication interface 135. In an alternative embodiment, CPU 215 is integrated with other devices 220.

CPU 215 interacts with a first operator 230, e.g., without limitation, via user input interface 130 and/or presentation interface 120. In one embodiment, CPU 215 presents information about electric power conversion system 300, such as alarms, to operator 230. Other devices 220 interact with a second operator 235, e.g., without limitation, via user input interface 130 and/or presentation interface 120. For example, other devices 220 present alarms and/or other operational information to second operator 235. As used herein, the term "operator" includes any person in any capacity associated with operating and maintaining electric power conversion system 300, including, without limitation, shift operations personnel, maintenance technicians, and facility supervisors.

In the exemplary embodiment, electric power conversion system 300 includes one or more monitoring sensors 240 coupled to CPU 215 through at least one input channel 245. Monitoring sensors 240 collect operational measurements including, without limitation, AC and DC voltages and currents generated within and transmitted through electric power conversion system 300. Monitoring sensors 240 repeatedly, e.g., periodically, continuously, and/or upon request, transmit operational measurement readings at the time of measurement. CPU 215 receives and processes the operational measurement readings. Such data is transmitted across network 225 and may be accessed by any device capable of accessing network 225 including, without limitation, desktop computers, laptop computers, and personal digital assistants (PDAs) (neither shown). In alternative embodiments, CPU 215 includes, without limitation, sufficient data, algorithms, and commands to facilitate control of the DC current transmission through electric power conversion system 300.

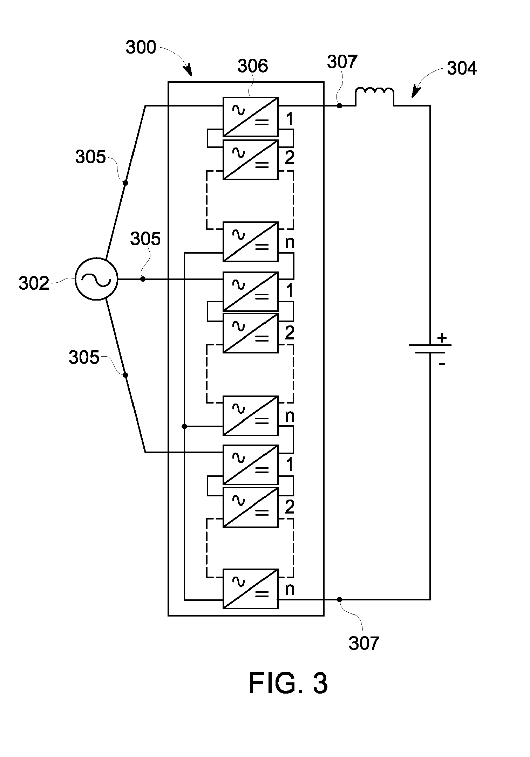

FIG. 3 is a schematic diagram of electric power conversion system 300 that may be monitored and controlled using SCADA system 200 (shown in FIG. 2). In the exemplary embodiment, electric power conversion device 300 couples alternating current (AC) electric power generation devices 302 (only one shown) to a HVDC electric power transmission grid, or system 304 that may be positioned hundreds, or thousands, of kilometers from devices 302 across rugged and/or remote terrain, e.g., mountainous hillsides, large bodies of water, and extended distances from users. AC electric power generation devices 302 may be rated for voltages in excess of 100 kilovolts (kV) AC and HVDC electric power transmission system 304 may be rated for voltages in excess of 100 kV DC. In some embodiments, devices 302 define an AC electric power system or grid.

In the exemplary embodiment, AC electric power generation devices 302 may be positioned off-shore, i.e., devices 302 may be off-shore wind farms. Alternatively, AC electric power generation devices 302 may include any type of renewable electric power generation system including, for example, and without limitation, solar power generation systems, fuel cells, thermal power generators, geothermal generators, hydropower generators, diesel generators, gasoline generators, and/or any other device that generates power from renewable energy sources. Alternatively, AC electric power generation devices 302 may include any type of non-renewable electric power generation system including, for example, and without limitation, coal- and oil-fired facilities, gas turbine engines, nuclear power generation facilities and/or any other device that generates power from non-renewable energy sources. Moreover, any number of electric power generation devices 302 may be used. Also, AC electric power generation devices 302 may include an AC power grid.

In the exemplary embodiment, electric power conversion system 300 includes a plurality of power conversion modules 306 electrically coupled in series for each phase on the AC side through AC terminals 305, with three parallel AC phases shown, and in series on the DC side through DC terminals 307. Each of the three phases includes n power conversion modules 306. In the exemplary embodiment, each power conversion module 306 is configured to generate a unipolar output voltage and a bi-polar current. Alternatively, power conversion modules 306 are configured to generate electric power with any voltage and current characteristics that enable operation of electric power conversion system 300 as described herein.

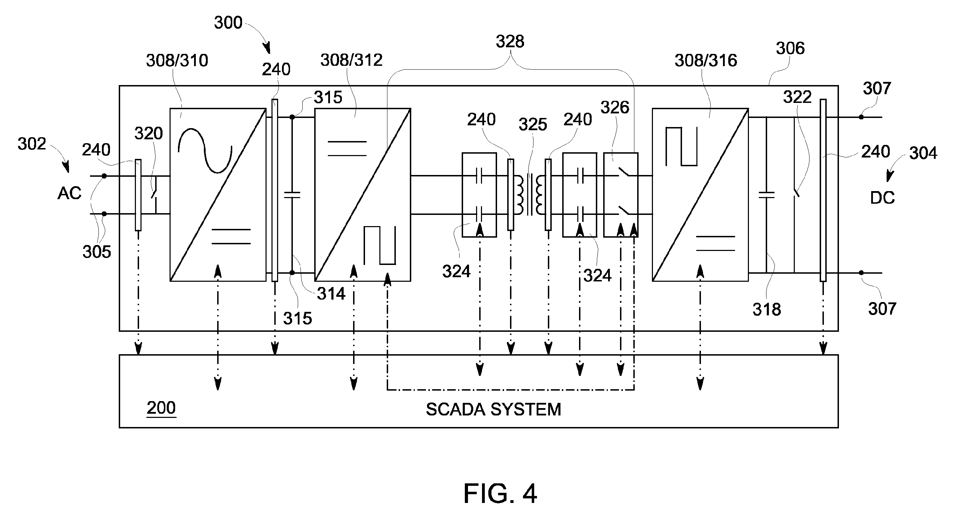

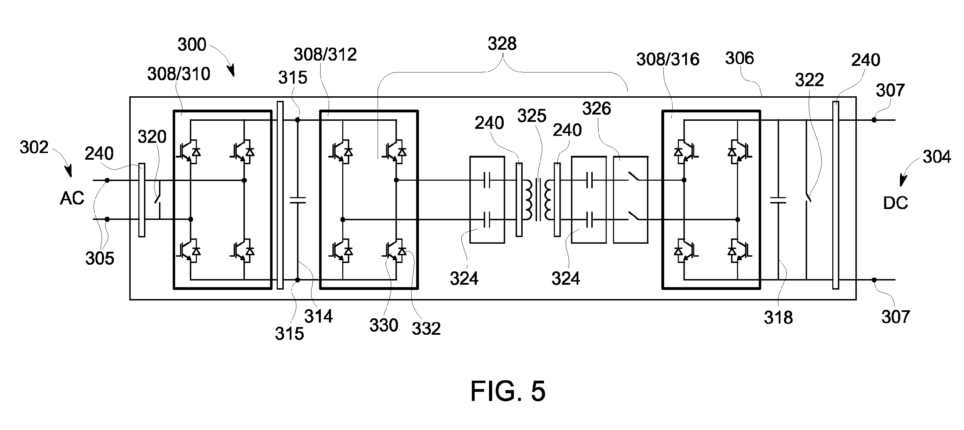

FIG. 4 is a schematic diagram of power conversion module 306 that may be used with electric power conversion system 300. FIG. 5 is another schematic diagram of power conversion module 306. Power conversion module 306 includes a plurality of bi-directional power converters 308. A first bi-directional power converter 310 is coupled to AC electric power generation devices 302. First bi-directional power converter 310 is configured to convert AC power to DC power when power flows from AC electric power generation devices 302 toward HVDC electric power transmission system 304. Also, first bi-directional power converter 310 is configured to convert DC power to AC power when power flows from HVDC electric power transmission system 304 toward AC electric power generation devices 302.

A second bi-directional power converter 312 is coupled to first bi-directional power converter 310 through a first DC link 314 and DC terminals 315. Second bi-directional power converter 312 is configured to convert DC power to high frequency AC (HFAC) power when power flows from AC electric power generation devices 302 toward HVDC electric power transmission system 304. Also, second bi-directional power converter 312 is configured to convert HFAC power to DC power when power flows from HVDC electric power transmission system 304 toward AC electric power generation devices 302.

A third bi-directional power converter 316 is coupled to HVDC electric power transmission system 304 through a second DC link 318. Third bi-directional power converter 316 is configured to convert HFAC power to DC power when power flows from AC electric power generation devices 302 toward HVDC electric power transmission system 304. Also, third bi-directional power converter 316 is configured to convert DC power to HFAC power when power flows from HVDC electric power transmission system 304 toward AC electric power generation devices 302.

Power conversion module 306 includes an AC bypass switch 320 coupled to first bi-directional power converter 310 and AC electric power generation devices 302. Power conversion module 306 also includes a DC bypass switch 322 coupled third bi-directional power converter 316 and HVDC electric power transmission system 304. Power conversion module 306 further includes a pair of two-port passive networks 324 and a voltage matching transformer 325 therebetween to facilitate zero-voltage-switching (ZVS) and/or zero-current-switching (ZCS) of power converters 308, 312, and 316 to increase operational efficiency as well as facilitating reduction of electromagnetic interference (EMI) induced by switching effects of power conversion module 306.

Power conversion module 306 includes at least one isolation device, e.g., without limitation, mechanical isolation device 326 positioned between the DC-side two-port passive network 324 and third bi-directional power converter 316. In the exemplary embodiment, mechanical isolation device 326 is a switch device with open and closed positions (shown open). Alternatively, mechanical isolation device 326 is any device that enables operation of power conversion module 306 as described herein, including, without limitation, a circuit breaker and a recloser. Mechanical isolation device 326 and second bi-directional power converter 312 are operatively coupled (discussed further below) to define an isolable portion 328 of power conversion module 306.

Each of first, second, and third bi-directional current converters 310, 312, and 316, respectively, includes semiconductor devices 330, e.g., insulated gate bipolar transistors (IGBTs) (only shown in FIG. 5), with off-on characteristics, in parallel with an anti-paralleling diodes 332 (only shown in FIG. 5). Alternatively, any semiconductor devices that enable operation of bi-directional current converters 310, 312, and 316 as described herein are used, including, without limitation, insulated gate commutated thyristors (IGCTs), silicon controlled rectifiers (SCRs), gate commutated thyristors (GCTs), symmetrical gate commutated thyristors (SGCTs), and gate turnoff thyristors (GTOs).

Each power conversion module 306 in electric power conversion system 300 is coupled to SCADA system 200 (only shown in FIG. 4). SCADA system 200 includes a plurality of monitoring sensors 240 that include, without limitation, voltage monitoring sensors and current monitoring sensors. Power conversion module 306 and SCADA 200 may also include any other sensing devices that enable operation of power conversion module 306 as described herein. Monitoring sensors 240 are configured to transmit real-time current and voltage monitoring information to SCADA system 200. Any positioning and configuration of monitoring sensors 240 that enables operation of power conversion module 306 as described herein may be used. Moreover, mechanical isolation device 326, two-port passive networks 324, and first, second, and third bi-directional current converters 310, 312, and 316, respectively, are configured to receive commands from SCADA system 200 and transmit status and feedback information to SCADA system 200.

Alternatively, any control system architecture that enables operation of power conversion module 306 and SCADA system 200 is used. For example, and without limitation, each of first, second, and third bi-directional current converters 310, 312, and 316, respectively, and mechanical isolation device 326 may include at least one controller (not shown) that includes at least one processor (not shown). As used herein, the terms "controller", "control system", and "processor" include any programmable system including systems and microcontrollers, reduced instruction set circuits, application specific integrated circuits, programmable logic circuits, and any other circuit capable of executing the functions described herein. The above examples are exemplary only, and thus are not intended to limit in any way the definition and/or meaning of the term processor. Moreover, each controller may include sufficient processing capabilities to execute support applications including, without limitation, those for SCADA system 200. Each associated controller may be coupled to associated monitoring sensors 240 and may also be coupled to and/or a portion of SCADA system 200.

In operation, AC electric power generation devices 302 generate three-phase, sinusoidal, AC power (only one phase shown in FIGs. 4 and 5). First bi-directional current converter 310 receives and rectifies the sinusoidal, AC power to DC power at predetermined first voltage (typically in excess of 500V) and energizes first DC link 314. Second bi-directional current converter 312 receives the DC power transmitted from first bi-directional current converter 310 through first DC link 314 and converts the DC power having a first voltage to HFAC with an approximate square wave and a predetermined HFAC voltage. The HFAC power is transmitted through two-port passive networks 324 and voltage matching transformer 325 to facilitate ZVS/ZCS operation and reducing electromagnetic interference (EMI) induced by switching effects of power conversion module 306 and to condition the amplitude of the HFAC power. Mechanical isolation device 326 is typically closed. Therefore, the conditioned HFAC power is transmitted to third bi-directional power converter 316 that converts the HFAC power to HVDC power in a predetermined voltage range (typically in excess of 500V) that energized second DC link 318 and transmits power to HVDC transmission system 304.

In some circumstances, electric power may flow in the reverse direction, i.e., bi-directional power converters 310, 312, and 316 facilitate converting HVDC power from system 304 to AC power that is transmitted to system 302. Also, in operation, monitoring sensors 240 transmit real-time operational status and feedback information to SCADA system 200, and in some embodiments, directly to, without limitation, each of first, second, and third bi-directional current converters 310, 312, and 316, respectively, and mechanical isolation device 326.

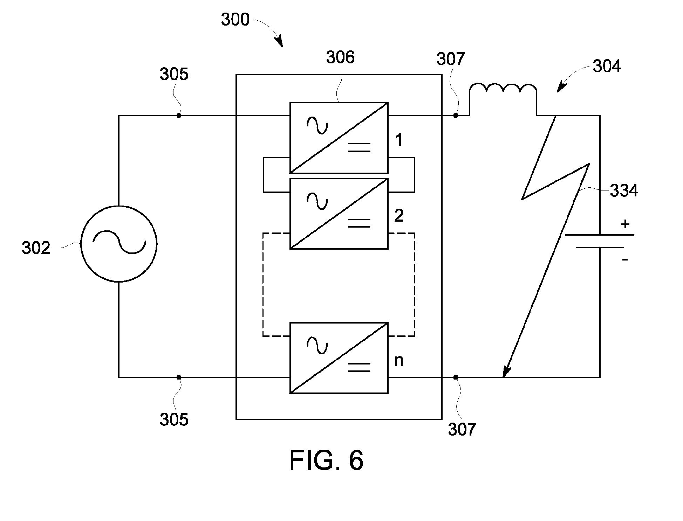

FIG. 6 is a schematic diagram of a portion, i.e., one of the three phases of electric power conversion system 300 with a fault 334 shown in HVDC electric power transmission system 304. Referring to FIGs. 4, 5, and 6, fault 334 induces a rapidly increasing electric current flow through modules 306 that may be accompanied by voltage fluctuations, both sensed by monitoring sensors 240. The information is transmitted to SCADA 200 and/or second bi-directional current converter 312 and mechanical isolation device 326. SCADA 200 determines if electric current transmission through at least one of electric power conversion system 300 and HVDC transmission system 304 is one of approaching, attaining, and exceeding at least one parameter of at least one of electric power conversion system 300 and HVDC transmission system 304. If SCADA system 200 determines that protective action is required, electric current transmission through isolatable portion 328 is decreased through regulation of second bi-directional current converter 312 until the current decreases to a predetermined value, e.g., approximately zero amperes. Such protective action is completed in less than approximately 100 microseconds (µs), and may be completed in less than 50 µs. SCADA system 200 then opens mechanical isolation device 326 when current transmitted therethrough is approximately zero amperes, such opening taking approximately 1 millisecond (ms). In the event the fault clears quickly enough, mechanical isolation device 326 may not need to open. Any current value that enables operation of SCADA system 200 and electric power conversion system 300 may be used. While only one power conversion module 306 is shown in FIGs. 4 and 5, and FIG. 6 only shows one of three phases, all of power conversion modules 306 in all phases are similarly, and substantially simultaneously, isolated such that electric power conversion system 300 is fully removed from service until fault 334 is cleared.

SCADA system 200 may also facilitate restoration of electric power conversion system 300 to service. Mechanical isolation device 326 is closed in each module 306 substantially simultaneously such that isolatable portion 328 is unisolated and full service is restored by increasing electric current transmission through isolable portion 328 through regulation of second bi-directional power converter 312.

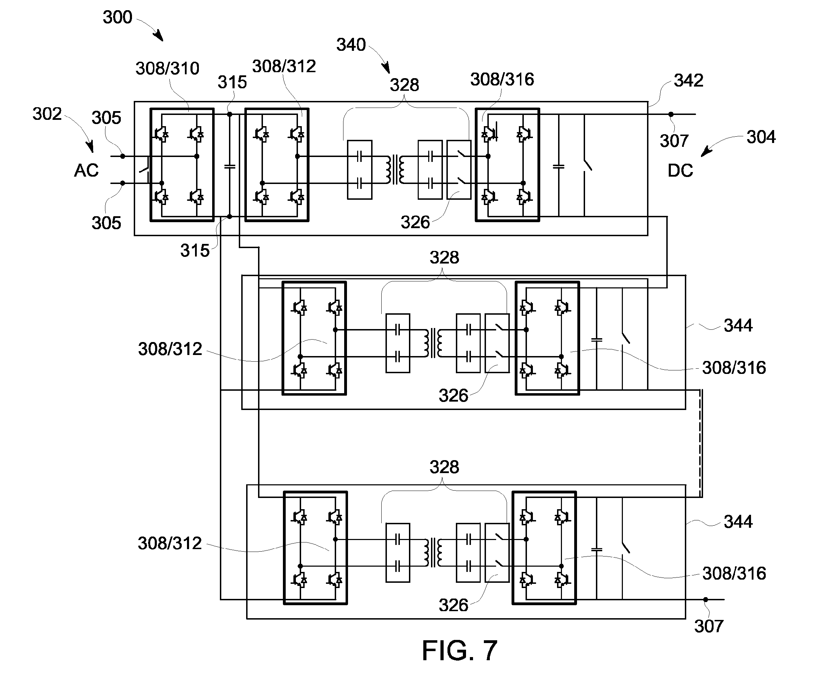

FIG. 7 is a schematic diagram of an alternative power conversion module 340 that may be used with electric power conversion system 300. Power conversion module 340 includes two sub-modules, i.e., a first sub-module 342 that is similar to module 306 with the exception of connections to two second sub-modules 344. Power conversion module 340 facilitates greater power transmission through power converter system 300 than module 306 due to the two additional sub-modules 344 in parallel with sub-module 342. SCADA 200 (shown in FIG. 2) is used to monitor and control operation of power conversion module 340 and operation of each of sub-modules 342 and 344 is similar to operation of modules 306. Any combination of sub-modules 342 and 344 may be used in any of the phases and any of the modules 340 that enable operation of power converter system 300 as described herein.

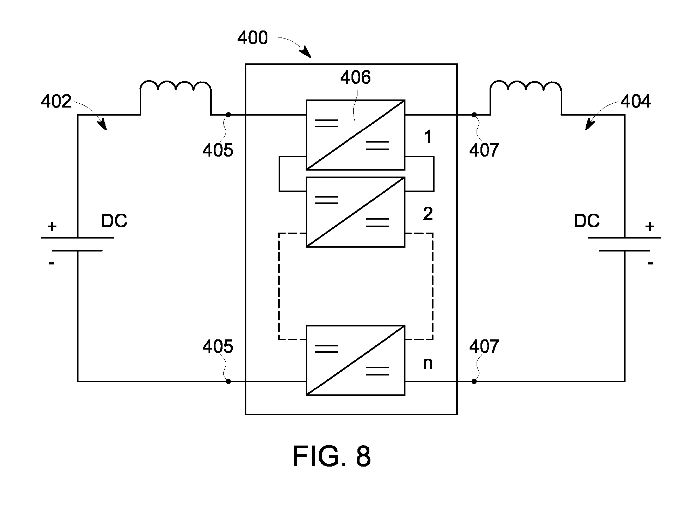

FIG. 8 is a schematic diagram of an alternative electric power conversion system 400 that may be monitored and controlled using SCADA system 200 (shown in FIG. 2). In this alternative embodiment, electric power conversion system 400 couples a first DC system 402 to a second DC system 404 that may be similar to HVDC electric power transmission system 304 (shown in FIGs. 3-7). Both DC systems 402 and 404 may be rated for voltages in excess of 100 kilovolts (kV). Alternatively, DC systems 402 and 404 may have any voltage rating that enables operation of electric power conversion system 400 as described herein. Also, in this alternative exemplary embodiment, electric power conversion system 400 includes a plurality of power conversion modules 406 electrically coupled in series to first DC system 402 and second DC system 404 through a first set of DC terminals 405 and a second set of DC terminals 407, respectively. Electric power conversion system 400 includes n power conversion modules 406.

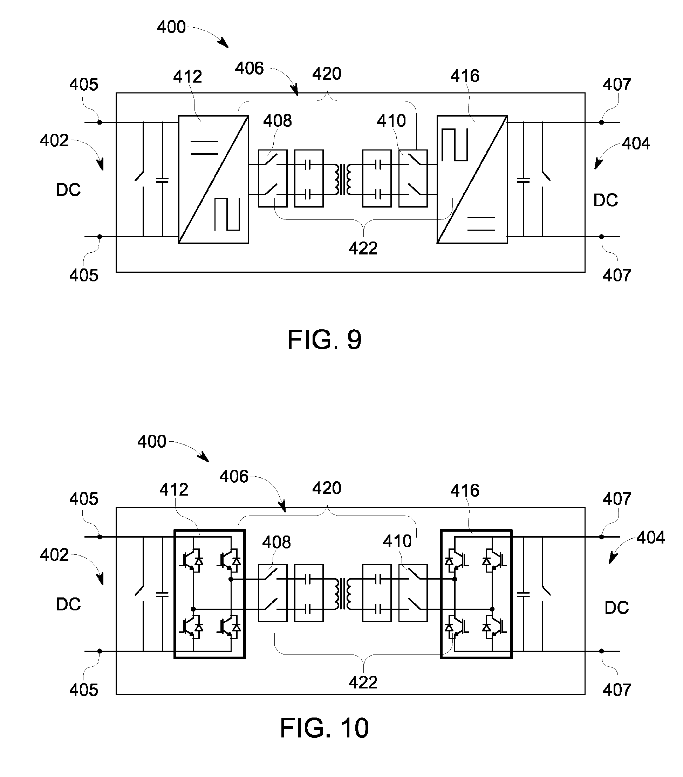

FIG. 9 is a schematic diagram of alternative power conversion module 406 that may be used with electric power conversion system 400. FIG. 10 is another schematic diagram of power conversion module 406. In this alternative embodiment, electric power conversion system 400 couples first DC system 402 to second DC system 404. Power conversion module 406 includes a first mechanical isolation device 408 and a second mechanical isolation device 410 positioned between a first bi-directional power converter 412 and a second bi-directional power converter 416. First and second mechanical isolation devices 408 and 410, respectively, are similar to mechanical isolation device 326 (shown in FIGs. 4, 5, and 7). First bi-directional power converter 412 is similar to second bi-directional power converter 312 (shown in FIGs. 4, 5, and 7) and second bi-directional power converter 416 is similar to third bi-directional power converter 316 (shown in FIGs. 4, 5, and 7).

Also, in this alternative embodiment, first bi-directional power converter 412 and second mechanical isolation device 410 are operatively coupled to define a first isolable portion 420 of power conversion module 406. Similarly, second bi-directional power converter 416 and first mechanical isolation device 408 are operatively coupled to define a second isolable portion 422 of power conversion module 406. SCADA 200 (shown in FIG. 2) is used to monitor and control operation of power conversion module 406 and operation of module 406 is similar to operation of modules 306 (shown in FIGs. 3-6).

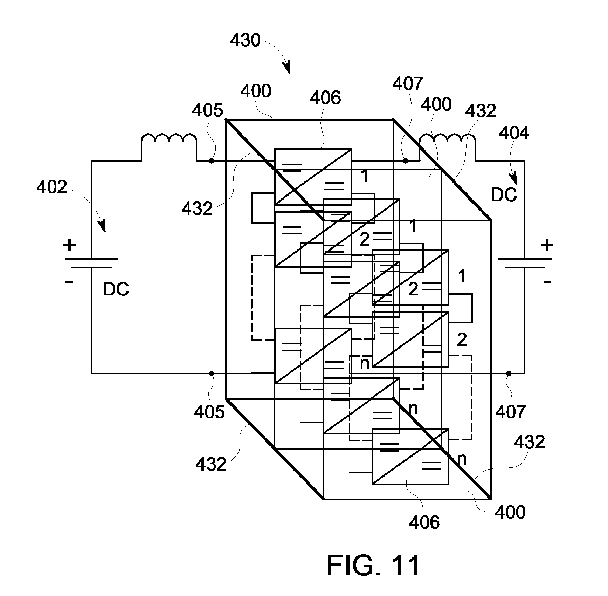

FIG. 11 is a schematic diagram of another alternative electric power conversion system 430 that may be monitored and controlled using SCADA system 200 (shown in FIG. 2). In this alternative embodiment, electric power conversion system 430 couples first DC system 402 to second DC system 404. Also, in this alternative embodiment, electric power conversion system 430 includes a plurality of electric power conversion systems 400 coupled to each other through a plurality of DC rails 432. Further, in this embodiment, electric power conversion systems 400 are vertically stacked (shown slightly off-center for clarity) to form electric power conversion system 430. Alternatively, any number of electric power conversion systems 400 may be configured in any arrangement that enables operation of electric power conversion system 430 as described herein. SCADA 200 (shown in FIG. 2) is used to monitor and control operation of power conversion system 430 and operation of system 430 is similar to operation of modules 306 (shown in FIGs. 3-6).

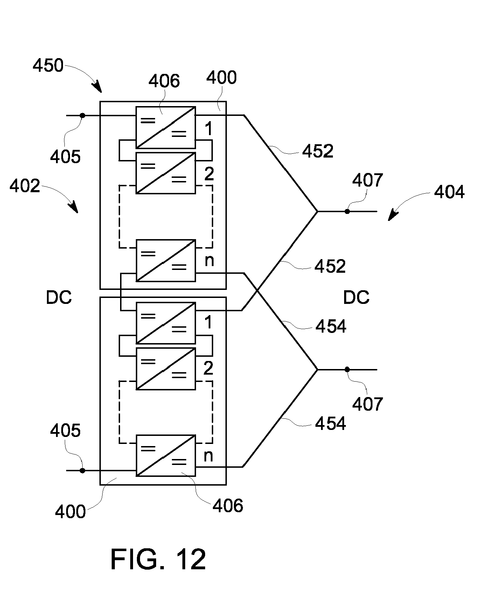

FIG. 12 is a schematic diagram of yet another alternative electric power conversion system 450 that may be monitored and controlled using SCADA system 200 (shown in FIG. 2). In this alternative embodiment, electric power conversion system 450 couples first DC system 402 to second DC system 404. Also, in this alternative embodiment, electric power conversion system 430 includes a plurality of electric power conversion systems 400 coupled to each other through a plurality of first DC conduits 452 configured for a first polarity and second DC conduits 454 configured for a second polarity. Alternatively, any number of electric power conversion systems 400 may be configured in any arrangement that enables operation of electric power conversion system 450 as described herein. SCADA 200 (shown in FIG. 2) is used to monitor and control operation of power conversion system 430 and operation of system 450 is similar to operation of modules 306 (shown in FIGs. 3-6).

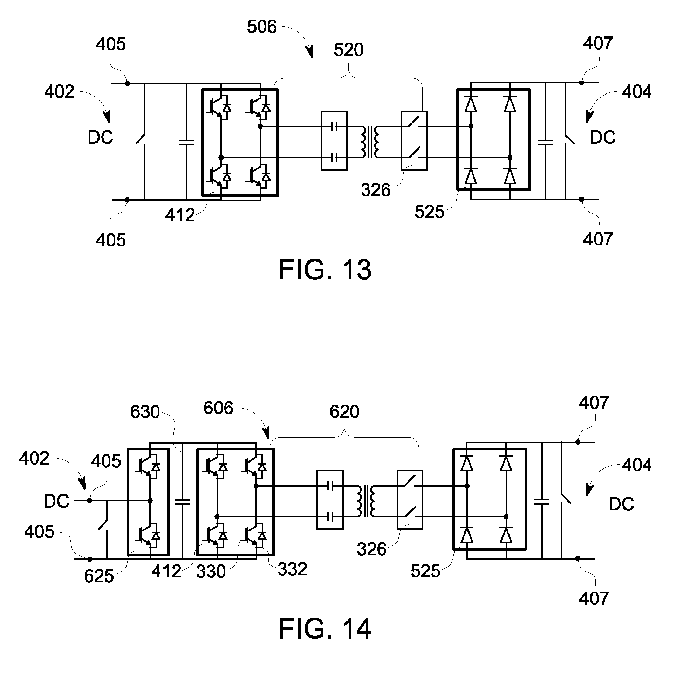

FIG. 13 is a schematic diagram of an alternative power conversion module 506 that may be used with electric power conversion system 400 (shown in FIG. 8). In this alternative embodiment, power conversion module 506 couples first DC system 402 to second DC system 404. Power conversion module 506 includes mechanical isolation device 326 and bi-directional power converter 412 that are operatively coupled to define an isolable portion 520 of power conversion module 506. Power conversion module 506 also includes a diode rectifier device 525 that facilitates one way electric current transmission from first DC system 402 to second DC system 404 and prevents current transmission in the opposite direction. SCADA 200 (shown in FIG. 2) is used to monitor and control operation of power conversion module 506 and operation of module 506 is similar to operation of modules 306 (shown in FIGs. 3-6). Power conversion module 506 may be used with electric power conversion system 400 to form stacked systems similar to system 430 (shown in FIG. 11) and paralleled system similar to system 450 (shown in FIG. 12).

FIG. 14 is a schematic diagram of another alternative power conversion module 606 that may be used with electric power conversion system 400 (shown in FIG. 8). Power conversion module 606 is similar to power conversion module 506 with the exception that power conversion module 606 includes a levelizing electric power converter 625 coupled to electric power converter 412 through a DC link 630. Levelizing electric power converter 625 facilitates equal power sharing with a linear control of levelizing converter 625. Such linear levelizing facilitates increasing the efficiency of power conversion through an even distribution of power as compared to non-linear control of converters 412 in power conversion module 506. Power conversion module 606 may be used with electric power conversion system 400 to form stacked systems similar to system 430 (shown in FIG. 11) and paralleled system similar to system 450 (shown in FIG. 12).

The above-described electric power conversion systems for HVDC transmission systems provide a cost-effective method for transmitting HVDC power. The embodiments described herein facilitate transmitting HVDC power across relatively large distances while facilitating rapid detection and isolation of affected electric power conversion systems in the event of electrical faults on the HVDC transmission system. The embodiments described herein also facilitate rapid restoration of the affected electric power conversion systems after the faulted portions of the system are effectively isolated. Specifically, the devices, systems, and methods described herein include a plurality of bi-directional power converters and mechanical isolation devices that are operatively coupled to the bi-directional power converters. The bi-directional power converters and mechanical isolation devices define isolable portions of the electric power conversion system. The bi-directional power converters facilitate real-time decreasing of electric current through the isolable portions in the event that electric current sensed being transmitted through the conversion system or on the HVDC transmission system exceeds parameters as communicated in real time to a Supervisory Control and Data Acquisition (SCADA) system. Specifically, in the event that sensed electric current exceed parameters, the bi-directional power converters decrease the electric current transmitted therethrough and as the current approaches or attains a value of approximately zero, the SCADA system initiates opening the associated mechanical isolation devices with a significantly reduced load that will approach zero amperes, thereby mitigating a potential for damage to the contactors of the mechanical isolation devices. Fault isolation occurs approximately three orders of magnitude more rapidly than the typical five milliseconds (ms) needed to reduce a partial for a reduction of service life to the affected components.

Also, the devices, systems, and methods described herein facilitate system restoration. Once the electrical fault is cleared, the SCADA system will initiate post-fault recovery actions. Specifically, the cleared mechanical isolation devices will reclose under near-zero loads and the associated bi-directional power converters will increase the current transmitted through the restored isolable portions to restore DC power transmission to the affected portions expeditiously.

An exemplary technical effect of the methods, systems, and apparatus described herein includes at least one of: (a) decreasing a time period of fault detection and isolation on a HVDC transmission system and associated electric power conversion systems through a mechanical isolation device to less than 100 µs, and in some cases, less than approximately 50 µs; (b) decreasing exposure of electric power conversion system components to elevated electric current conditions due to a fault through decreasing power transmission through isolable portions of the electric power conversion systems to near-zero values and opening an associated mechanical isolation device in less than 100 µs, and in some cases, approximately 50 µs, i.e., approximately three orders of magnitude less than the time to isolate through a mechanical isolation device; (c) decreasing transmission of electric current through mechanical isolation devices to near-zero values to facilitate rapid opening to clear electrical fault conditions and reclosing to restore power transmission; and (d) substantially reducing a need to use slower acting and costly DC circuit breakers to isolate faults.

Exemplary embodiments of HVDC transmission systems and electric power conversion systems for coupling power generation facilities and the grid, and methods for operating the same, are described above in detail. The HVDC transmission systems, bi-directional power converters, and methods of operating such systems and devices are not limited to the specific embodiments described herein, but rather, components of systems and/or steps of the methods may be utilized independently and separately from other components and/or steps described herein. For example, the methods may also be used in combination with other systems requiring HVDC transmission and power conversion and the associated methods, and are not limited to practice with only the HVDC transmission systems, bi-directional power converters, and methods as described herein. Rather, the exemplary embodiment can be implemented and utilized in connection with many other DC transmission applications that are currently configured to receive and accept bi-directional power converters, e.g., and without limitation, DC distribution systems in remote areas and industrial facilities.

Although specific features of various embodiments of the invention may be shown in some drawings and not in others, this is for convenience only. In accordance with the principles of the invention, any feature of a drawing may be referenced and/or claimed in combination with any feature of any other drawing.

Some embodiments involve the use of one or more electronic or computing devices. Such devices typically include a processor or controller, such as a general purpose central processing unit (CPU), a graphics processing unit (GPU), a microcontroller, a reduced instruction set computer (RISC) processor, an application specific integrated circuit (ASIC), a programmable logic circuit (PLC), and/or any other circuit or processor capable of executing the functions described herein. The methods described herein may be encoded as executable instructions embodied in a computer readable medium, including, without limitation, a storage device and/or a memory device. Such instructions, when executed by a processor, cause the processor to perform at least a portion of the methods described herein. The above examples are exemplary only, and thus are not intended to limit in any way the definition and/or meaning of the term processor.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. An electric power conversion system (300; 400; 430; 450) coupled to a high voltage direct current (HVDC) transmission system (304; 402; 404), said electric power conversion system comprising:
a plurality of power conversion modules (306; 406), wherein at least one power conversion module of said plurality of power conversion modules comprises:
at least one power converter (308, 310, 312, 316; 412, 416; 625) coupled to at least one DC power terminal (307; 315; 405; 407); and
at least one isolation device (326; 408, 410) coupled to said at least one power converter, said at least one power converter and said at least one isolation device at least partially define an isolatable portion (328; 420, 422; 520; 620) of said electric power conversion system, said at least one isolation device configured to remove said isolatable portion from service, said at least one power converter configured to decrease electric current transmission through said isolatable portion prior to opening said at least one isolation device.

2. A electric power conversion system (300; 400; 430; 450) according to claim 1, wherein:
said at least one power converter (308, 310, 312, 316; 412, 416; 625) comprises a first power converter (312, 316; 412, 416) coupled to said at least one DC power terminal (307, 315; 405, 407); and
said at least one power conversion module (306; 406) further comprises a second power converter (316; 412; 416) coupled to said at least one isolation device (326; 408, 410).

3. An electric power conversion system (300; 400; 430; 450) according to claim 2, wherein said at least one power conversion module (306) further comprises a third power converter (310) coupled to said first power converter (312) through a DC link (314), wherein said third power converter is further coupled to at least one of an AC power generator (302) and an AC power transmission system (302).

4. An electric power conversion system (300; 400; 430; 450) according to claim 2, wherein said at least one power conversion module (406) further comprises a third power converter (625) coupled to said first power converter (412) through a DC link (630), wherein said third power converter is further coupled to at least one DC power system (402).

5. An electric power conversion system (300; 400; 430; 450) according to claim 1, wherein:
said at least one power converter (308, 310, 312, 316; 412, 416; 625) comprises a first power converter (412, 416) coupled to at least one DC power terminal (405, 407); and
said at least one power conversion module (406) further comprises a second power converter (416, 412) coupled to the HVDC transmission system (404, 402); and
said at least one isolation device (408, 410) comprises:
a first isolation device (408, 410) operatively coupled to said second power converter, wherein said second power converter is configured to decrease electric current transmission through said isolatable portion (420, 422) prior to opening of said first isolation device; and
a second isolation device (410, 408) operatively coupled to said first power converter, wherein said first power converter is configured to decrease electric current transmission through said isolatable portion prior to opening of said second isolation device.

6. An electric power conversion system (300; 400; 430; 450) according to any preceding claim, wherein said at least one power conversion module (406) further comprises at least one diode rectifier device (525) coupled to said at least one isolation device (326).

7. An electric power conversion system (300; 400; 430; 450) according to any preceding claim, wherein said at least one power converter (308, 310, 312, 316; 412, 416; 625) is a bi-directional power converter configured to transmit electric power having unipolar voltage and bipolar current characteristics.

8. An electric power conversion system (300; 400; 430; 450) according to any preceding claim, wherein said plurality of power conversion modules (306) are coupled to at least one AC power terminal (305) and the HVDC transmission system (304).

9. An electric power conversion system (300; 400; 430; 450) according to any preceding claim, wherein said plurality of power conversion modules (406) are coupled to at least one DC power terminal (405, 407) and the HVDC transmission system (402, 404).

10. A control system (200) for an electric power conversion system (300; 400; 430; 450) that is coupled to an HVDC transmission system (304; 402; 404), the electric power conversion system includes a plurality of power conversion modules (306; 406), wherein at least one of the power conversion modules includes at least one power converter (308, 310, 312, 316; 412, 416; 625) coupled to at least one DC power terminal (307; 315; 405; 407), the at least one power conversion module further includes at least one isolation device (326; 408, 410) coupled to the at least one power converter, the at least one power converter and the at least one isolation device at least partially define an isolatable portion (328; 420, 422; 520; 620) of the electric power conversion system, the at least one isolation device configured to remove the isolatable portion from service, the at least one power converter configured to decrease electric current transmission through the isolatable portion prior to opening of the at least one isolation device, said control system comprising:
at least one sensor (240) configured to transmit at least one signal representative of a value of electric current transmission through at least one of the electric power conversion system and the HVDC transmission system; and
at least one processor (115) coupled to said at least one sensor, the at least one power converter, and the at least one isolation device, said at least one processor configured to:
determine at least one of electric current transmission approaching, attaining, and exceeding at least one parameter of at least one of the electric power conversion system and the HVDC transmission system;
regulate electric current transmission through the isolatable portion at least partially as a function of the value of electric current transmission through at least one of the electric power conversion system and the HVDC transmission system; and
open the at least one isolation device when said at least one sensor measures electric current transmission at a predetermined value.
